(19) Europäisches Patentamt
European Patent Office
Office européen des brevets

(11) EP 0 494 449 B1

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.$^6$: **C08L 77/00**, C08K 5/13, C08K 3/32

(21) Anmeldenummer: **91122264.4**

(22) Anmeldetag: **27.12.1991**

(54) **Farbstabilisierte Polyamidformmassen**

Colour-stabilized polyamide moulding compositions

Compositions de moulage de polyamides stabilisées contre la décoloration

(84) Benannte Vertragsstaaten:
**DE FR GB IT**

(30) Priorität: **08.01.1991 DE 4100316**

(43) Veröffentlichungstag der Anmeldung:
**15.07.1992 Patentblatt 1992/29**

(73) Patentinhaber: **BAYER AG**
**D-51368 Leverkusen (DE)**

(72) Erfinder:
- **Heinz, Hans-Detlef, Dr.**
**W-4150 Krefeld 11 (DE)**
- **Stahlke, Kurt-Rainer, Dr.**
**W-5067 Kürten (DE)**
- **Dhein, Rolf, Dr.**
**W-4150 Krefeld (DE)**

(56) Entgegenhaltungen:
**EP-A- 0 347 780** **WO-A-88/06169**

EP 0 494 449 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der Erfindung sind phenolhaltige Polyamidformmassen mit Zusätzen ausgewählter Salze von Sauerstoffsäuren des Phosphors, welche verbesserte Farbe bzw. Farbstabilität nach thermischer Belastung aufweisen. Gegenstand der Erfindung sind weiterhin ein Verfahren zur Herstellung der neuen Formmassen sowie deren Verwendung zur Herstellung von Formkörpern, Folien, Fasern, Halbzeugen, Verbundwerkstoffen (Composites) und anderen Gegenständen, sowie entsprechende Formkörper.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen polyamidbildenen Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern), zu Werkstoffen mit spaziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Ein Nachteil der Polyamide als Werkstoffklasse liegt in ihrer hohen Wasseraufnahme, bedingt durch die Polarität und Hydrophilie der Amidgruppen. Das als Weichmacher wirkende Wasser erhöht zwar die Duktilität des Materials, jedoch sinken Steifigkeit und Festigkeit stark ab. Die Wasseraufnahme ist daher ein limitierender Faktor für die weitere Verbreitung von Polyamiden in bestimmten Anwendungsgebieten.

Methoden, die Wasseraufnahme von Polyamiden signifikant zu verringern, wobei auch andere Eigenschaften wie Fließfähigkeit, Oberflächengüte und UV-Stabilität verbessert sein können, sind beispielsweise in den eigenen Patentanmeldungen DOS 3 248 329, EP-O 0 240 887 und DOS 3 610 595 beschrieben. Dabei werden phenolische Verbindungen als Additive den Polyamiden zugesetzt. Die resultierenden Formmassen weisen sehr gute Eigenschaften auf und sind vorteilhafterweise z.B. für alle Anwendungen, die eine erhöhte Dimensionsstabilität erfordern, einsetzbar.

Phenolhaltige Polyamide sind auch noch beispielsweise in UDSSR 687 088 sowie bei V.N. Stepanov, A.A. Speranskii, L.S. Gerasimova, G.V. Khutareva, Khim. Volokna 1978 (6), 51; V.N. Stepanov, A.V. Dolgov, A.A. Speranskii, Khim. Volokna 1977 (4), 31; V.N. Stepanov, V.F. Lednik, A.I. Lubnina, A.A. Speranskii, Khim. Volokna 1975 (4), 3; S.I. Shkusenko, V.M. Kharitonov, B.A. Khar'Kov, et al., Khim, Volokna 1983 (5), 25, beschrieben. Viele der in den genannten Patentanmeldungen bzw. Artikeln beschriebenen Verbindungen fanden später noch einmal in EP-A 347 780, JA 60/051 744, 60/051 745 und WO 88/061 69 Erwähnung.

Die relativ hohe Konzentration phenolischer OH-Gruppen kann jedoch, z.B. bei der Verarbeitung, bei der Schnellkonditionierung mit heißem Wasser oder auch bei erhöhten Einsatztemperaturen, zu Verfärbungen führen. Es wäre daher wünschenswert, Polyamidmassen mit verringerter Wasseraufnahme und verbesserter Farbe bzw. Farbstabilität bereitzustellen.

Überraschend wurde nun gefunden, daß die Farbe phenolhaltiger Polyamide dadurch deutlich verbessert werden kann, daß ihnen kleine Mengen spezieller Salze von Phosphorsäuren zugesetzt werden.

Gegenstand der Erfindung sind daher thermoplastische Formmassen aus

1) 65 bis 99,89 Gew.-% üblicher thermoplastische Polyamide nämlich Polyamid 6,66,69,610,11,12 sowie Copolyamide auf Basis dieser bzw. enthaltend diese Einheiten, und Copolyamide auf Basis von Terephthalsäure, Hexamethylendiamin und Caprolactam oder Adipinsäure

2) 0,1 bis 30 Gew.-% phenolischer Verbindungen mit mindestens einer phenolischen OH-Gruppe im Molekül, wobei die Stellungen ortho zu der phenolischen OH-Gruppe nicht durch tertiäre Alkylgruppen substituiert sind,

3) 0,01 bis 5 Gew.-% an Salzen von Sauerstoffsäuren des Phosphors mit einem $pK_s$-Wert (25°C, Wasser) von mindestens 1,5,
sowie

4) 0 bis 200 Gew.-%, bezogen auf 1) bis 3), üblicher Zusatzstoffe.

Gegenstand der Erfindung sind auch Mischungen, erhalten durch Vermischen der Komponenten 1) bis 4) in der Schmelze.

Als Polyamide A) sind beispielsweise und bevorzugt geeignet:

PA6, 66, 610, 69, 11, 12, 1212, 6/66-Copolyamide, Copolyamide auf Basis von Terephthalsäure, Hexamethylendiamin und Caprolactam oder Adipinsäure und andere Copolyamide auf Basis PA 6 oder 66.

Besonders bevorzugt sind PA6, 66 sowie Mischungen von oder Copolyamide auf Basis PA6 bzw. 66.

Bevorzugte Polyamide 1) weisen einen zumindest leichten Überschuß an Aminendgruppen auf, bevorzugt ein Verhältnis von Carboxyl- zu Aminendgruppen von maximal 3 (Gewichtsverhältnis) auf. Besonders bevorzugt beträgt das

Verhältnis maximal 1.

Bevorzugte Phenole 2) weisen mindestens zwei phenolische OH-Gruppen im Molekül auf. Die bevorzugten Phenole 2) werden durch die allgemeine Formel (I) charakterisiert,

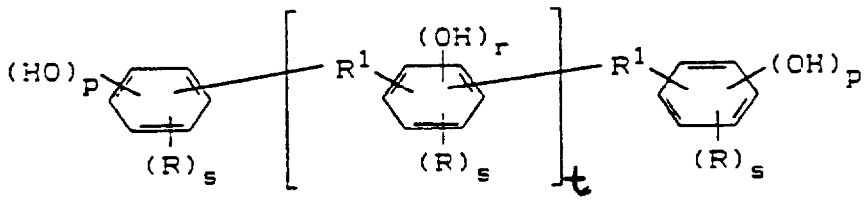

(I)

wobei

R unabhängig voneinander Wasserstoff (H), $C_1$-$C_{20}$-(Ar)Alkyl (vorzugsweise Methyl) und $C_6$-$C_{18}$-(Alk)aryl, bzw. $C_{1-20}$-(Ar)alkyloxy- und $C_6$-$C_{18}$-(Alk)aryloxyreste,

$R^1$ unabhängig voneinander eine chemische Bindung, einen $C_{1-20}$-Rest, vorzugsweise einen $C_1$-$C_{20}$-Alkylen oder (gegebenenfalls cyclischen) Alkyliden-Rest, eine Ester-, eine Amidgruppe, -O-, -SO-, -$SO_2$-, -S-, -CO-,

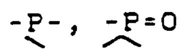

oder auch eine Anellierung zweier oder mehrerer Ringe,

p 1 oder 2, besonders bevorzugt 1,

r für die Zahlen 0, 1 oder 2, besonders bevorzugt 1,

s für die Zahlen 0, 1 oder 2, besonders bevorzugt 0 oder 1,

t eine Zahl von 0 bis 15 (Mittelwert), besonders bevorzugt 0 bis 10, insbesondere 1 bis 10,

bedeuten, und wobei kein zu einer OH-Gruppe orthoständiger Rest eine tertiäre Alkylgruppe sein soll.

Bevorzugte Verbindungen der Formel (I) sind 2,2-(bis-4-hydroxy-phenyl)-propan (Bisphenol A), Bis-4-hydroxyphenylmethan (Bisphenol F), 1,1-(Bis-4-hydroxyphenyl)-cyclohexan (Bisphenol Z), 2,2-Bis-(4-hydroxy-3,5-dimethylphenyl) -propan, 1,1-Bis(4-hydroxyphenyl)-3,3,5-trimethylcyclohexan, 4,4'-Dihydroxydiphenylsulfon sowie Phenol- bzw. Alkylphenol/Formaldehyd-Kondensate (Novolake).

Als Novolake sind insbesondere die der Formel (II)

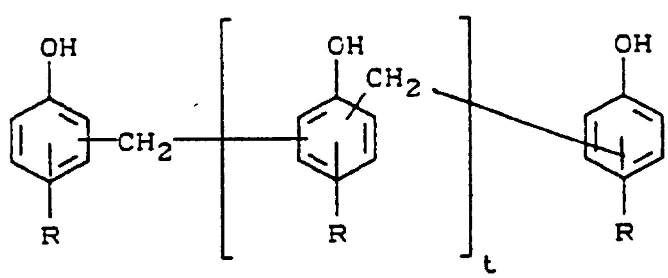

(II)

worin

R Wasserstoff oder $C_{1-5}$-Alkyl oder Phenyl, insbesondere Wasserstoff, und t eine ganze Zahl von (Mittelwert) 1 bis 8 bedeuten, so daß ihr Molekulargewicht ($\overline{M}_n$) zwischen ca. 300 und ca. 1.500 g $mol^{-1}$ liegt, bevorzugt.

Die phenolischen Mischungsbestandteile 2) können einzeln oder im Gemisch eingesetzt werden. Es können auch Isomerengemische bzw. Reaktionsrohprodukte eingesetzt werden.

Die phenolischen Mischungsbestandteile 2) sind prinzipiell bekannt oder können nach prinzipiell bekannten Verfahren hergestellt werden.

Die Bis- bzw. Polyphenole 2) werden bevorzugt zu 2 bis 20 Gew.-% und besonders bevorzugt zu 5 bis 15 Gew.-% eingesetzt. In besonderen Fällen, z.B. bei Pultrusionsanwendungen oder zur Herstellung anderer Verbundwerkstoffe,

können auch Mengen von bis zu 25 Gew.-% bevorzugt und bis zu 20 % besonders bevorzugt sein.

Die bevorzugt erfindungsgemäß einzusetzenden Salze von Phosphorsäuren weisen $pk_s$-Werte im Bereich von 1,5 - 10,0, insbesondere 3 bis 9, auf.

Bevorzugte Phosphorsalze 3) der Erfindung leiten sich von den Sauerstoffsäuren des Phosphors mit Oxidationsstufen von +III bis +V ab. Sie lassen sich durch die allgemeinen Formeln (III) bzw. (IV) darstellen (im Fall von Di- oder Polyphosphorsäuren bildet beispielsweise (III) einen Teil der Kette dieser Phosphorsäuren):

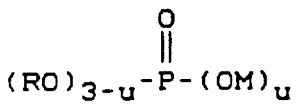

(III)

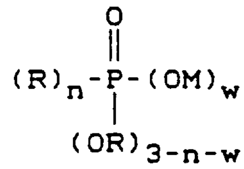

(IV)

wobei

M ein einwertiges Metall, insbesondere Natrium und Kalium,

R Wasserstoff oder einen aliphatischen oder aromatischen $C_{1-30}$-Rest, insbesondere Wasserstoff in Formel (III), und der (OR)-Gruppe in Formel (IV),

n 0 - 2,

u 1 und 2, insbesondere 1,

w 1 und 2, insbesondere 1,

bedeuten, mit der Maßgabe, daß $n + w \leq 3$ ist und immer mindestens eine OH-Gruppe an Phosphor enthalten ist.

Besonders bevorzugt sind Natriumdihydrogenphosphat, Kaliumdihydrogenphosphat, Natriumhydrogenphosphit, Kaliumhydrogenphosphit sowie die Mononatrium (pro Phosphoratom) bzw. Monokaliumsalze der ortho- bzw. meta-Oligo bzw. Polyphosphorsäuren.

Die Verbindungen 3) werden bevorzugt zu 0,1 bis 2 Gew.-% und besonders bevorzugt zu 0,2 bis 1 Gew.-% eingesetzt.

Sie können auch beispielsweise als Hydrate eingesetzt werden.

Als Zusatzstoffe 4) sind beispielsweise geeignet: Füllstoffe bzw. Verstärkungsstoffe (Glasfasern, Glaskugeln, Kohlenstoffasern, Aramidfasern, $TiO_2$, $Mg(OH)_2$, $Al(OH)_3$, AlO(OH), Zinkborat(hydrat), mineralische Füllstoffe, UV-Stabilisatoren, Lichtstabilisatoren, Antioxidantien, polymere Legierungspartner, Pigmente, Farbstoffe, Nukleierungsmittel, Kristallisationsbeschleuniger- bzw. Verzögerer, Fließhilfsmittel, Gleitmittel, Entformungsmittel, Flammschutzmittel, wie sie im Stand der Technik beschrieben sind.

Als polymere Legierungspartner kommen z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-Acrylsäure/Acrylester-Terpolymere, Ethylen-Vinylacetat-Copolymere, Polyoctenylene, Polystyrole, ($\alpha$-Methyl)Styrol-(Meth)acrylnitrilcopolymere, (Meth)Acrylnitril-Butadien-($\alpha$-Methyl)Styrol-Polymere (ABS), schlagzähe Polystyrole, Polycarbonate, aromatische Polyester(carbonate), Polyester wie z.B. Polyethylenterephthalat, Polysulfone, Polyphenylen-oxide, Polyetherketone, Polyether-etherketone, Polyarylensulfide, Polyamidimide, Polyethersulfone, Polyetherimide, Polyesterimide und Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgen kann. Möglichkeiten hierzu sind im Stand der Technik beschrieben und grundsätzlich bekannt (z.B. über Carbonsäure- oder Carbonsäureanhydridgruppen oder Carbonsäure-(t.-alkyl)ester oder Aminogruppen). Es können auch entsprechende Polymerzusätze als Verträglichkeitsvermittler mitverwendet werden.

Bevorzugte Legierungspartner sind solche, die üblicherweise zur Erhöhung der Kälte- und/oder Trockenschlagzähigkeit eingesetzt werden (Schlagzähmodifikatoren).

Die Zusatzstoffe 4) sind in Zusatzmengen von bis zu 200 %, bezogen auf 1) bis 3), bevorzugt 0,01 bis 100 %, in den Mischungen anwesend.

Die Herstellung der erfindungsgemäßen Polyamidformmassen erfolgt, gegebenenfalls in mehreren Schritten, durch Mischen der Komponenten in der Schmelze, bevorzugt in Knetern oder Extrudern. Alle zur Abmischung von Thermoplasten üblichen Verfahren können angewendet werden. Die Zusatzstoffe 2) bis 4) können in Form der reinen Substanzen oder als Konzentrate eingesetzt werden, gegebenenfalls vorvermischt.

Die erfindungsgemäßen Mischungen können nach verschiedenen Verfahren, z.B. Spritzguß, Extrusion, Pultrusion, "film-stacking", zu Formkörpern, Folien, Fasern, verstärkten Halbzeugen, Verbundwerkstoffen (Composites) und anderen üblichen Polymerformkörpern verarbeitet werden. Diese sind ebenfalls Gegenstand der Erfindung.

Zur Herstellung von verstärkten Halbzeugen/Verbundwerkstoffen sind Füllgrade von 20 bis 90 Gew.-%, bevorzugt 30 bis 85 Gew.-% und insbesondere 40 bis 85 Gew.-% an üblichen Verstärkungsstoffen (z.B. Endlosfasern, Matten, Vliese, Rovings, z.B. auf Basis von Glasfasern, Kohlenstoffasern, Aramidfasern, PAN-Fasern, Metallfasern ), wie sie im Stand der Technik für Verbundwerkstoffe (Composites) beschrieben sind, geeignet.

Weitere Einzelheiten hierzu finden sich in der DE-A 3 934 710.9.

Die erfindungsgemäßen Mischungen 1) bis 4) vereinigen die Vorteile der Phenolmodifizierung, nämlich reduzierte Wasseraufnahme und Wasseraufnahmegeschwindigkeit, erhöhte Dimensionsstabilität, sowie gegebenenfalls verbesserte Fließfähigkeit, UV-Stabilität, Oberflächengüte und andere mehr, mit einer verbesserten Farbe bzw. Farbstabilität durch den Stabilisator 3). Dies äußert sich dadurch, daß die Mischungen 1) bis 4) gegenüber Mischungen, die die Komponente 3) nicht enthalten, je nach Additiv 2), beispielsweise nach der Compoundierung und Verarbeitung, heller (weißer) wirken. Die farbstabilisierende Wirkung kann aber auch erst bei einer Heißwasserlagerung (Schnellkonditionierung) oder einer erhöhten Einsatztemperatur, je nach Additiv 2), wirksam werden. Dieser farbstabilisierende bzw. farbverbessernde Effekt der erfindungsgemäßen Kombination war unerwartet und aus dem Stand der Technik nicht ableitbar.

Dazu kommt, daß beispielsweise Natriumdihydrogenphosphat und - Natriumdihydrogenphosphit, trotz ihrer unterschiedlichen Oxidationsstufen, praktisch die gleiche Wirksamkeit zeigen. Dies bedeutet, daß im Fall der Formmassen 1) bis 4) ein besonderer, bisher nicht bekannter Stabilisierungsmechanismus vorliegen muß, da man für die Verbindung mit $P^{+III}$ eine viel bessere Wirksamkeit als für die $p^{+V}$-Verbindung erwarten sollte.

Die erfindungsgemäßen Formmassen stellen daher eine Bereicherung des Standes der Technik dar.

Die nachfolgenden Beispiele erläutern die Erfindung, ohne sie darauf einzuschränken. Insbesondere charakterisieren die Einselbeispiele auch daraus zu bildende Mengenbereiche bzw. Stoffgruppen.

## Beispiele

### Beispiele 1 und 2 und Vergleichsbeispiel 1

Polyamid 6-Granulat ($\eta_{rel} \sim 3{,}5$) wurde mit 10 Gew.-% 2,2-Bis-(4-Hydroxyphenyl)propan (Bisphenol A) sowie 0,25 bzw. 0,5 Gew.-% Natriumdihydrogenphosphatdihydrat bei 260°C über einen ZSK 53-Doppelwellenextruder compoundiert (30 kg/h Durchsatz), in ein Wasserbad abgesponnen, granuliert und getrocknet.

Das Granulat wurde zu 80x10x4 [in mm] Stäben verspritzt und die Farbe optisch beurteilt (Tabelle 1).

### Beispiele 3 und 4 und Vergleichsbeispiel 2

Die Prüfstäbe der Proben der Beispiele 1 und 2 und Vergleichsbeispiel 1 wurden in einem Trockenschrank 22 h lang bei 100°C an Luft gelagert. Anschließend wurde wiederum die Farbe der Prüfstäbe optisch beurteilt (Tabelle 1).

Tabelle 1

| Beispiel | Bisphenol A [Gew.-%] | $NaH_2PO_4x2H_2O$ [Gew.-%] | $\eta_{rel}$ | Farbe |
|---|---|---|---|---|
| 1 | 10 | 0,25 | 3,4 | fast weiß |
| 2 | 10 | 0,50 | 3,3 | fast weiß |
| Vgl. 1 | 10 | - | 3,6 | etwas gelblich |
| 3 | 10 | 0,25 | 3,4 | fast weiß |
| 4 | 10 | 0,50 | 3,4 | fast weiß |
| Vgl. 2 | 10 | - | 3,6 | hellbraun |

### Beispiele 5 und 6 und Vergleichsbeispiel 3

Die Beispiele 1 und 2 und Vergleichsbeispiel 1 wurden wiederholt und Rechteckplatten der Maße 60x40x4 [in mm] daraus hergestellt. Die Plättchen wurden vor der Messung auf weißen Karton aufgeklebt. Die quantitativen Farbmessungen (YI- Werte bzw. Reflektionswerte) sind in Tabelle 2 zusammengestellt.

Beispiele 7 und 8 und Vergleichsbeispiel 4

In der für die Beispiele 5 und 6 bzw. Vergleichsbeispiel 3 beschriebenen Weise wurde als Phenol 2) ein Phenol-Formaldehyd-Novolak ($CH_2O$:Phenol - 0,78:1) eingesetzt. Die Farbdaten sind ebenfalls in Tabelle 2 enthalten.

Tabelle 2

| Beispiel | Farbe | YI-Wert | R [%] bei [nm] | | | | | |
|---|---|---|---|---|---|---|---|---|
| | | | 400 | 450 | 500 | 550 | 600 | 700 |
| 5 (1) | leicht grau | 20,1 | 30,5 | 33 | 37,5 | 40,5 | 42 | 44 |
| 6 (2) | fast weiß | 8,8 | 41 | 44 | 47,5 | 48,5 | 48,5 | 48,5 |
| Vgl.3(1) | grau-braun | 30,0 | 25 | 28 | 32,5 | 36,5 | 40 | 44,5 |
| 7 | gelb | 56,3 | 5 | 16 | 41,5 | 45,5 | 46 | 47 |
| 8 | hellgelb | 50,2 | 6 | 19,5 | 47 | 49 | 49 | 48,5 |
| Vgl.4 | kräftig gelb | 66,4 | 3,5 | 12 | 36,5 | 43 | 45 | 46,5 |
| 9 | hellgelb | 30,5 | - | - | - | - | - | - |
| Vgl.5 | gelb | 41,3 | - | - | - | - | - | - |
| 10 | - | 40,6 | - | - | - | - | - | - |
| Vgl.6 | - | 58,0 | - | - | - | - | - | - |

Beispiel 9 und Vergleichsbeispiel 5

In der für die vorhergehenden Beispiele beschriebenen Weise wurden Compounds aus Polyamid 6 ($\eta_{rel} \sim 3,5$), 10 Gew.-% des genannten Novolaks, 2 Gew.-% Polyphenylensulfid der Schmelzviskosität 39 Pas bei 310°C und 1000 $s^{-1}$ und 0,25 Gew.-% Natriumdihydrogenphosphat, welches 24 h lang bei 100°C im Wasserstrahlvakuum getrocknet worden war, bzw. ohne Natriumdihydrogenphosphat, hergestellt.

Die Ergebnisse der Farbmessung sind ebenfalls in Tabelle 2 enthalten.

Beispiel 10 und Vergleichsbeispiel 6

Probekörper der Compounds der Beispiele 9 bzw. Vergleich 6 wurden 75 Stunden lang bei 70°C in Wasser gelagert. YI-Werte finden sich in Tabelle 2.

Beispiele 11 und 12 und Vergleichsbeispiele 6 und 7

50 % glasfaserverstärktes PA 6 bzw. 66 ($\eta_{rel} \sim 2,9$) wurden mit 5 Gew.-% des genannten Novolaks, 2 Gew.-% Polyphenylensulfid und 0,25 Gew.-% Natriumdihydrogenphosphat bzw. ohne das Phosphat-Salz compoundiert (Temperaturbereich: ca. 280 bis 295°C) und zu 80x10x4 mm Prüfkörpern verspritzt. Die Farbe der das Natriumdihydrogenphosphat enthaltenden Prüfkörper war deutlich heller als die der Prüfkörper aus dem Vergleichsmaterial.

Beispiel 13 und Vergleichsbeispiel 9

In der für die Beispiele 1 und 2 beschriebenen Weise wurde PA 6 ($\eta_{rel} \sim 3,5$) mit je 10 Gew.-% Bisphenol A, 2 Gew.-% eines Nukleiermittelkonzentrats von Talkum in PA 6 und mit bzw. ohne 0,5 Gew.-% Natriumdihydrogenphosphit compoundiert (ZSK 30-Doppelwellenextruder, 12 $kg^{-1}$, 276 bis 277°C) und zu 60x40x4 (mm) Platten verspritzt.

Nach einer Wärmelagerung von 24 h/100°C waren die Prüfkörper der das Salz enthaltenden Probe deutlich heller als die der Vergleichsprobe.

**Patentansprüche**

**1.** Thermoplastische Formmassen, enthaltend

1) 65 bis 99,89 Gew.% üblicher thermoplastischen Polyamide, nämlich Polyamid 6, 66, 69, 610, 11, 12 sowie Copolyamide auf Basis dieser bzw. enthaltend diese Einheiten, Copolyamide auf Basis von Terephthalsäure, Hexamethylendiamin und Caprolactam oder Adipinsäure

2) 0,1 bis 30 Gew.-% phenolischer Verbindungen mit mindestens einer phenolischen OH-Gruppe im Molekül, wobei die Stellungen ortho zu der phenolischen OH-Gruppe nicht durch tertiäre Alkylgruppen substituiert sind,

3) 0,01 bis 5 Gew.-% an Salzen von Sauerstoffsäuren des Phosphors mit einem $pK_s$-Wert (25°C, Wasser) von mindestens 1,5,
sowie zusätzlich

4) 0 bis 200 Gew.-%, bezogen auf 1) bis 3), üblicher Zusatzstoffe.

**2.** Thermoplastische Formmassen nach Anspruch 1, und wobei die Aminendgruppen im Überschuß gegenüber den Carboxylendgruppen vorliegen.

**3.** Thermoplastische Formmassen nach Ansprüchen 1 und 2, enthaltend als Phenole 2) Bis- und Polyphenole der allgemeinen Formel (I),

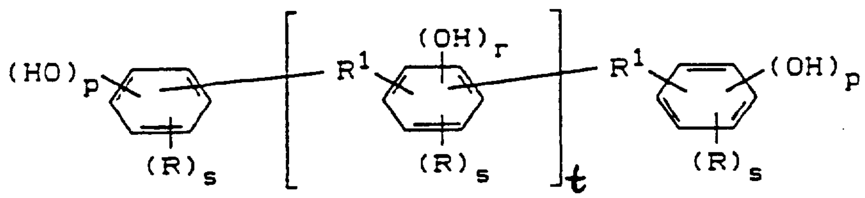

(I)

wobei

R unabhängig voneinander Wasserstoff (H), $C_1$-$C_{20}$-(Ar)Alkyl und $C_6$-$C_{18}$-(Alk)aryl, bzw. $C_{1-20}$-(Ar)alkyloxy- und $C_6$-$C_{18}$-(Alk)aryloxyreste,

$R^1$ unabhängig voneinander eine chemische Bindung, einen $C_1$-$C_{20}$-Rest, eine Ester-, eine Amidgruppe, -O-, -SO-, $-SO_2-$, -S-, -CO-,

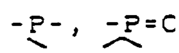

oder auch eine Anellierung zweier oder mehrerer Ringe,

p 1 oder 2,

r für die Zahlen 0, 1 oder 2,

s für die Zahlen 0, 1 oder 2,

t eine Zahl von 0 bis 15 (Mittelwert)

bedeuten, und wobei kein zu einer OH-Gruppe orthoständiger Rest eine tertiäre Alkylgruppe ist.

**4.** Thermoplastische Formmassen nach Anspruch 3, enthaltend als Phenole 2) 2,2-(bis-4-hydroxy-phenyl)-propan (Bisphenol A), Bis-4-hydroxy-phenylmethan (Bisphenol F), 1,1-(Bis-4-hydroxyphenyl)-cyclohexan (Bisphenol Z), 2,2-Bis-(4-hydroxy-3,5-dimethylphenyl)-propan, 1,1-Bis(4-hydroxyphenyl)-3,3,5-trimethylcyclohexan, 4,4'-Dihydroxydiphenylsulfon sowie Phenol- bzw. Alkylphenol/Formaldehyd-Kondensate (Novolake) der Formel (II),

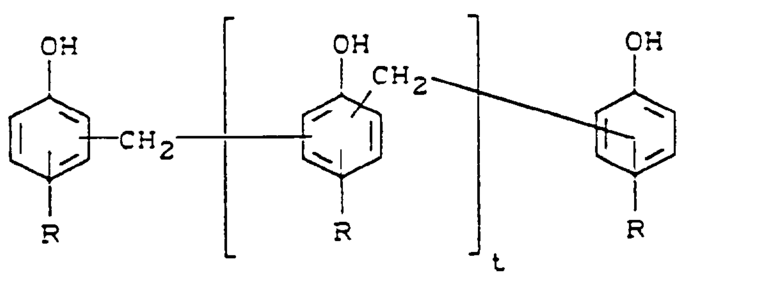

(II)

worin

R Wasserstoff oder $C_{1-5}$-Alkyl oder Phenyl, und t eine ganze Zahl von (Mittelwert) 1 bis 8 bedeuten, so daß ihr Molekulargewicht ($\overline{M}_n$) zwischen 300 und 1.500 g $mol^{-1}$ liegt.

**5.** Thermoplastische Formmassen nach Ansprüchen 1 bis 4, enthaltend 2 bis 25 Gew.-% der Phenole 2).

**6.** Thermoplastische Formmassen nach Ansprüchen 1 bis 5, enthaltend als Salze der Sauerstoffsäuren des Phosphors 3) solche mit $pk_s$-Werten von 1,5 - 10,0 der Formeln (III) und (IV),

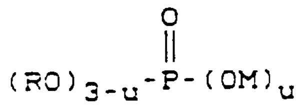

(III)

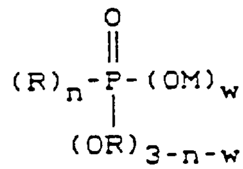

(IV)

wobei

M ein einwertiges Metall,

R Wasserstoff oder einen aliphatischen oder aromatischen $C_{1-30}$-Rest und der OR-Gruppe in Formel (IV),

n 0 - 2,

u 1 und 2,

w 1 und 2,

bedeuten, mit der Maßgabe, daß n + w ≤ 3 ist, und immer mindestens eine OH-Gruppe an Phosphor enthalten ist, in Mengen von 0.1 bis 2 Gew.%.

**7.** Thermoplastische Formmassen nach Ansprüchen 1 bis 6, enthaltend als Zusatzstoffe 4) Füllstoffe, Verstärkungsstoffe , UV-Stabilisatoren, Antioxidantien, polymere Legierungspartner, Pigmente, Farbstoffe, Nukleierungsmittel, Kristallisationsbeschleuniger- bzw. Verzögerer, Fließhilfsmittel, Gleitmittel, Entformungsmittel, Flammschutzmittel , wie sie im Stand der Technik bekannt sind, in Zusatzmengen von 0,01 bis 100 Gew.-%, bezogen auf 1) bis 3).

**8.** Verfahren zur Herstellung der Polyamid-Formmassen nach Ansprüchen 1 bis 7, dadurch gekennzeichnet, daß die Komponenten vorvermischt oder in mehreren Schritten, als reine Stoffe oder als Konzentrate, in der Schmelze miteinander vermischt werden.

**9.** Verwendung der Formmassen nach Ansprüchen 1 bis 8 zur Herstellung von Formkörpern, Folien, Fasern, (verstärkten) Halbzeugen, Verbundwerkstoffen (Composites), nach Verfahren des Spritzgießens, der Extrusion, der Pultrusion, des "film-stacking" Verformungsverfahrens.

**10.** Formkörper, Folien, Fasern, (verstärkte) Halbzeuge, Verbundwerkstoffe (Composites) u.a. Gegenstände aus Polyamid-Formmassen nach Ansprüchen 1 bis 8.

## Claims

**1.** Thermoplastic moulding compositions containing

1) 65 to 99.89 % by weight of thermoplastic polyamides, namely polyamide 6, 66, 69, 610, 11, 12 and copolyamides based on or containing these units, copolyamides based on terephthalic acid, hexamethylene diamine and caprolactam or adipic acid,
2) 0.1 to 30 % by weight of phenolic compounds containing at least one phenolic OH group in the molecule, the ortho positions to the phenolic OH group not being substituted by tertiary alkyl groups,
3) 0.01 to 5 % by weight of salts of oxyacids of phosphorus having a $pK_s$ value (25°C, water) of at least 1.5 and

4) 0 to 200 % by weight, based on 1) to 3), of typical additives.

**2.** Thermoplastic moulding compositions as claimed in claim 1, the terminal amino groups being present in excess in relation to the terminal carboxyl groups.

**3.** Thermoplastic moulding compositions as claimed in claim 1 and 2 containing as phenols 2) bisphenols and polyphenols corresponding to general formula (I):

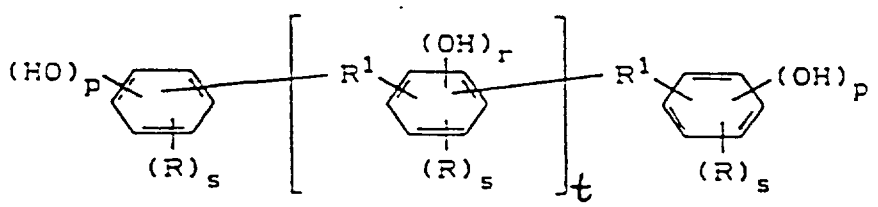

(I)

in which

the R's independently of one another represent (H), $C_{1-20}$ (ar)alkyl and $C_{6-18}$ (alk)aryl or $C_{1-20}$ (ar)alkyloxy and $C_{6-18}$ (alk)aryloxy radicals,

the $R^1$'s independently of one another represent a chemical bond, a $C_{1-20}$ radical, an ester group, an amide group, -O-, -SO-, $-SO_2-$, -S-, -CO-,

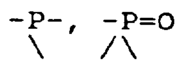

or even a fusion of two or more rings,

p is the number 1 or 2,

r is the number 0, 1 or 2,

s is the number 0, 1 or 2,

t is a number of 0 to 15 (average value),

no substituent in the ortho position to an OH group being a tertiary alkyl group.

**4.** Thermoplastic moulding compositions as claimed in claim 3 containing as phenols 2) 2,2-(bis-4-hydroxyphenyl) -propane (bisphenol A), bis-4-hydroxyphenyl (bisphenol F), 1,1-(bis-4-hydroxyphenyl)-cyclohexane (bisphenol Z), 2,2-bis-(4-hydroxy-3,5-dimethylphenyl)-propane, 1,1-bis-(4-hydroxyphenyl)-3,3,5-trimethyl cyclohexane, 4,4'-dihydroxydiphenyl sulfone and also phenol-formaldehyde and alkylphenol-formaldehyde condensates (novolaks) corresponding to formula (II):

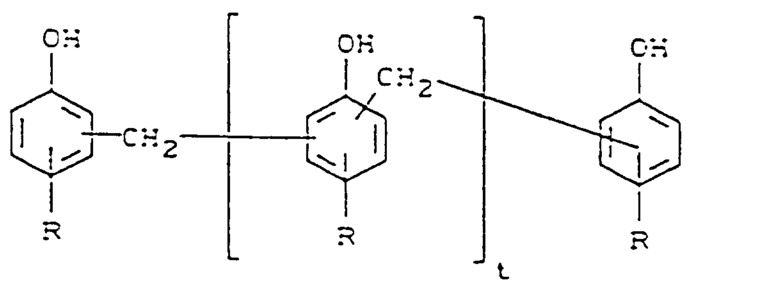

(II)

in which

R is hydrogen or a $C_{1-5}$ alkyl or phenyl and t is an integer of (average value) 1 to 8, so that its molecular weight ($\overline{M}_n$) is in the range from 300 to 1,500 g $mol^{-1}$.

**5.** Thermoplastic moulding compositions as claimed in claim 1 to 4 containing 2 to 25 % by weight of the phenols 2).

**6.** Thermoplastic moulding compositions as claimed in claim 1 to 5 containing as salts of the oxyacids of phosphorus 3) those having $pK_s$ values of 1.5 to 10.0 which correspond to formulae (III) and (IV):

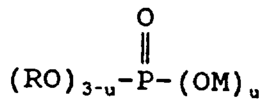

(III)

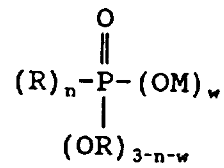

(IV)

in which

M is a monovalent metal,
R is hydrogen or an aliphatic or aromatic $C_{1-30}$ radical and the (OR) group in formula (IV),
n = 0 - 2,
u = 1 and 2,
w = 1 and 2,

with the proviso that $n + w \leq 3$ and at least one OH group is always present at phosphorus,
in quantities of 0.1 to 2% by weight.

**7.** Thermoplastic moulding compositions as claimed in claim 1 to 6 containing as additives 4) fillers, reinforcing materials, UV stabilizers, antioxidants, polymeric blend components, pigments, dyes, nucleating agents, crystallization accelerators or retarders, flow aids, lubricants, mould release agents, flameproofing agents in quantities of 0.01 to 100 % by weight, based on 1) to 3).

**8.** A process for the production of the polyamide moulding compositions claimed in claims 1 to 7 characterized in that the components are blended with one another in the melt in premixed form or in several steps and as pure substances or as concentrates.

**9.** The use of the moulding compositions claimed in claims 1 to 8 for the production of mouldings, films, fibers, (reinforced semifinished products, composites by injection moulding, extrusion, pultrusion, film stacking.

**10.** Mouldings, films, fibers, (reinforced) semifinished products, composites and other articles of the polyamide moulding compositions claimed in claims 1 to 8.

**Revendications**

**1.** Matières à mouler thermoplastiques contenant

1) 65 à 99,89 % en poids de polyamides thermoplastiques, à savoir du polyamide 6, 66, 69, 610, 11, 12 ou des copolyamides consistant en totalité ou en partie en les mêmes motifs, ou des copolyamides à base de l'acide téréphtalique, de l'hexaméthylènediamine et du caprolactame ou de l'acide adipique,
2) 0,1 à 30 % en poids de composés phénoliques contenant au moins un groupe OH phénolique par molécule, sous réserve que les positions ortho du groupe OH phénolique ne portent pas de substituant tert-alkyle,
3) 0,01 à 5 % en poids de sels d'acides oxygénés du phosphore ayant une valeur de $pK_a$ (à 25°C, dans l'eau) d'au moins 1,5,
et en outre
4) 0 à 200 % en poids, par rapport à 1) à 3), d'additifs usuels.

**2.** Matières à mouler thermoplastiques selon la revendication 1, dans lesquelles les groupes terminaux amino sont en excès par rapport aux groupes terminaux carboxyles.

**3.** Matières à mouler thermoplastiques selon les revendications 1 et 2 contenant en tant que phénols 2) des bis- et polyphénols de formule générale (I)

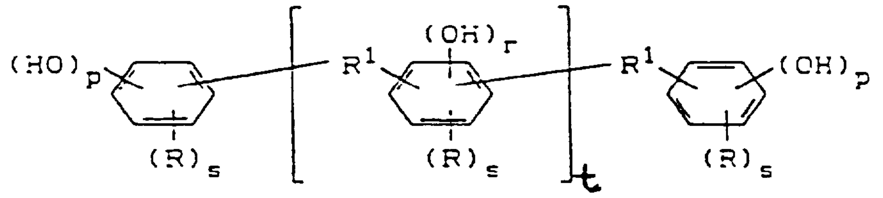
(I)

dans laquelle

les symboles R représentent chacun, indépendamment les uns des autres, l'hydrogène (H), un groupe (ar) alkyle en $C_1$-$C_{20}$, (alkyl)aryle en $C_6$-$C_{18}$, (ar)alkyloxy en $C_1$à $C_{20}$ ou (alkyl)aryloxy en $C_6$-$C_{18}$,
les symboles $R^1$ représentent chacun, indépendamment les uns des autres, une liaison chimique, un radical en $C_1$ à $C_{20}$, un groupe ester, un groupe amide, -O-, -SO-, -$SO_2$-, -S-, -CO-,

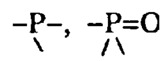

ou encore une condensation de deux ou plusieurs cycles,
p est égal à 1 ou 2,
r est égal à 0, 1 ou 2,
s est égal à 0, 1 ou 2,
t est un nombre allant de 0 à 15 (valeur moyenne),
sous réserve qu'il n'y a pas de groupe tert-alkyle en position ortho d'un groupe OH.

**4.** Matières à mouler thermoplastiques selon la revendication 3 contenant en tant que phénols 2) le 2,2-(bis-4-hydroxyphényl)propane (bisphénol A), le bis-4-hydroxyphénylméthane (bisphénol F), le 1,1-(bis-4-hydroxyphényl)cyclohexane (bisphénol Z), le 2,2-bis-(4-hydroxy-3,5-diméthylphényl)propane, le 1,1-bis-(4-hydroxyphényl)-3,3,5-triméthylcyclohexane, la 4,4'-dihydroxydiphénylsulfone ou des condensats phénol- ou alkylphénolsformaldéhyde (novolaques) de formule (II):

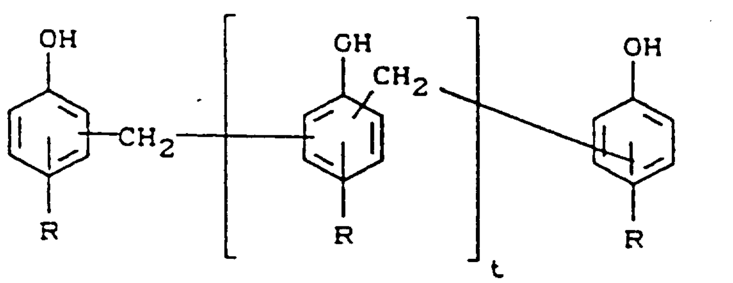
(II)

dans laquelle
les symboles R représentent chacun l'hydrogène ou un groupe alkyle en $C_1$ à $C_5$ ou un groupe phényle, et t est un nombre entier allant (valeur moyenne) de 1 à 8, de sorte que leur poids moléculaire $\overline{M}_n$ va de 300 à 1 500 g/mol.

**5.** Matières à mouler thermoplastiques selon les revendications 1 à 4, contenant de 2 à 5 % en poids des phénols 2).

**6.** Matières à mouler thermoplastiques selon les revendications 1 à 5 contenant, en tant que sels d'acides oxygénés du phosphore 3) des sels ayant des valeurs de $pK_a$ de 1,5 à 10,0 et répondant aux formules (III) et (IV)

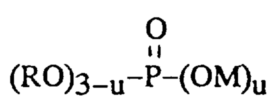
(III)

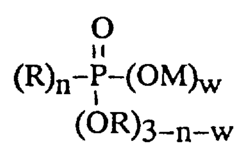
(IV)

dans lesquelles,

M représente un métal monovalent,
R représente l'hydrogène ou un radical aliphatique ou aromatique en $C_1$ à $C_{30}$, ou le groupe OR dans la formule (IV),

n est un nombre allant de 0 à 2,
u est égal à 1 ou 2,
w est égal à 1 ou 2,
sous réserve que la somme n + w est inférieure ou égale à 3 et qu'il y a toujours au moins un groupe OH sur le phosphore, en quantités de 0,1 à 2 % en poids.

**7.** Matières à mouler thermoplastiques selon les revendications 1 à 6, contenant en tant qu'additifs 4) des matières de charge, des matières renforçantes, des stabilisants aux UV, des antioxydants, d'autres composants polymères, des pigments, des colorants, des agents de nucléation, des accélérateurs ou retardateurs de cristallisation, des produits auxiliaires fluidifiants, des agents lubrifiants, des agents de démoulage, des agents ignifugeants, des types connus de la technique antérieure, en quantités de 0,01 à 100 % en poids par rapport à 1) à 3).

**8.** Procédé de préparation des matières à mouler en polyamide selon les revendications 1 à 7, caractérisé en ce que l'on mélange les composants entre eux à l'état fondu, tels quels ou à l'état de concentrés, après mélange préalable ou en plusieurs stades opératoires.

**9.** Utilisation des matières à mouler selon les revendications 1 à 8 pour la fabrication d'objets moulés, de feuilles, de fibres, de produits semi-finis (renforcés), de matériaux composites, par les techniques de moulage par injection, d'extrusion, de pultrusion, de "film-stacking".

**10.** Corps moulés, feuilles, fibres, produits semi-finis (renforcés), matériaux composites et autres objets consistant en matières à mouler en polyamides selon les revendications 1 à 8.